# EUROPÄISCHE PATENTANMELDUNG

(11) **EP 3 524 963 A1**
(43) Veröffentlichungstag der Anmeldung: **14.08.2019**
(21) Anmeldenummer: 18212816.5
(22) Anmeldetag: 22.09.2009
(51) Int. Cl.: G01N 21/64, G01B 21/16, G02B 21/00, G02B 21/16

(54) **FLUORESZENZMIKROSKOP**

(30) Priorität: 30.09.2008 DE 102008049886
(62) Teilanmeldung aus: 09778640.4
(71) Anmelder: Carl Zeiss Microscopy GmbH, 07745 Jena (DE)
(72) Erfinder: Kempe, Michael, 07751 Jena (DE); Krampert, Gerhard, Pleasanton, CA 94566 (US); Kleppe, Ingo, 07749 Jena (DE); Wolleschensky, Ralf, 07743 Jena (DE)
(74) Vertreter: Loritz, Rainer

(57) **Zusammenfassung**

Vorrichtung, insbesondere ein Mikroskop, charakterisiert durch ein beugungsbegrenztes Auflösungsvolumen,
mit mehreren zwischen unterschiedlichen Zuständen umschaltbaren Farbstoffmolekülen (UF), wobei mindestens ein Zustand fluoreszierend ist, die Fluoreszenz mit einem Objektiv (O) gesammelt und mit einem optischen System auf einen ortsauflösenden Detektor abgebildet wird,
wobei die umschaltbaren Farbstoffmoleküle in mindestens einem Teil der Probe eine Verteilungsdichte aufweisen, die größer ist als das Inverse des beugungsbegrenzten Auflösungsvolumens;
einer oder mehrere Lichtquellen zur Aussendung einer Umschaltstrahlung, um eine erste Untermenge der umschaltbaren Farbstoffmoleküle in der Probe umzuschalten und zur Aussendung einer Anregungsstrahlung, um die erste Untermenge der UF anzuregen,
wobei im Beleuchtungsstrahlengang ein Mittel zur Strukturierung der Beleuchtungsverteilung angeordnet ist

## Beschreibung

### Stand der Technik

Es sind auflösungssteigernde Verfahren in der Mikroskopie bekannt, in denen die Probe so beleuchtet wird, dass eine durch Fluoreszenz detektierbare Region entsteht, die kleiner ist, als es dem Beugungslimit nach Abbe entspricht.
Dies gelingt durch eine nichtlineare Wechselwirkung nach verschiedenen Verfahren:
- Abregung zuvor angeregte Moleküle durch stimulierte Emission (STED, Klar and Hell, Opt.Lett. 24 (1999) 954-956)
- Abregung zuvor angeregte Moleküle durch Weiteranregung in einen höheren nicht fluoreszenzfähigen Zustand (Excited State Absorption, Watanabe et al., Optics Express 11 (2003) 3271)
- Entvölkerung des Grundzustandes durch Tripletbesetzung (Ground State Depletion, Hell and Kroug, Appl. Phys. B 60 (1995), 495-497)
- Schalten eines Farbstoffs zwischen einem fluoreszierenden und nicht fluoreszierenden, weniger fluoreszierenden oder anders (wie andere Emissionswellenlänge, Polarisation) gekennzeichneten fluoreszierenden Zustand (Hell, Jakobs, and Kastrup, Appl. Phys. A 77 (2003) 859-860)

Die sogenannte Photoaktivation-Localization Microscopy (PAL-M) basiert auf der Möglichkeit, einzelne Moleküle deutlich genauer als die Halbwertsbreite der Point-Spread-Function (PSF) zu lokalisieren, wenn sich in der unmittelbaren Nähe kein weiteres emittierendes Molekül befindet. Dies kann man bei optisch schaltbaren Molekülen dadurch sicherstellen, dass die Aktivierungsstrahlung (die das Molekül in einen für Fluoreszenzanregung geeigneten Zustand versetzt) eine geeignete geringe Intensität aufweist. Die Anregungsstrahlung regt dann nur Moleküle mit geringer Dichte zur Fluoreszenz an. Aus den auf den Detektor abgebildeten, einzelnen PSF lassen sich dann mit einer durch die Photonenzahl und das Rauschen begrenzten Genauigkeit die Orte der Moleküle bestimmen. Durch reversibles oder irreversibles Zurückschalten in den nicht fluoreszenzanregbaren Zustand wird der Ausgangszustand wiederhergestellt und der Prozess kann wiederholt werden bis ein ausreichendes, hochaufgelöstes Bild der Probe vorliegt.
In WO2006/127692 ist das sogenannte PAL-M-Verfahren beschrieben.

Das Verfahren beruht auf der Photoaktivierung einzelner gemäß den Ausdehnungen der Detektions-PSF voneinander getrennter Moleküle und deren hoch genauen Lokalisierung durch Fluoreszenzdetektion
Das PALM Verfahren so wie in WO2006/127692 beschrieben verwendet im wesentlichen folgende primäre Schritte zur Erzeugung eines mikroskopischen Bildes mit einer gegenüber dem Standardmikroskop erhöhten optischen Auflösung:
1.) Photoaktivierung von Einzelmolekülen: Durch die Aktivierung werden die Fluoreszenzeigenschaften der Moleküle geändert (Ein-/Ausschalten, Änderung des Emissionsspektrum, ...), wobei die Aktivierung so erfolgt, dass der Abstand zwischen aktivierten Molekülen größer gleich der optischen Auflösung des Standardmikroskops (gegeben durch Abbesches Auflösungsgrenze) ist.
2.) Anregung der aktivierten Moleküle und Lokalisieren der Moleküle mit einem ortsauflösenden Detektor.
3.) Deaktivieren der aktivierten Moleküle.
4.) Wiederholung der Schritte 1-3 und Überlagerung der Lokalisationspunkte aus Schritt 2.), die aus verschiedenen Iterationschritten gewonnen wurden zu einem hochaufgelösten Bild.
Die Aktivierung erfolgt vorzugsweise, aber nicht zwingend, in Weitfeldbeleuchtung und statistisch verteilt.
Es werden Substanzen verwendet (als "opical label" bezeichnet) welche von einem inaktiven Zustand zu einem aktivierten Zustand überführt werden können.
Diese "PTOL" genannten Substanzen werden durch eine geeignete Aktivierungsstrahlung aktiviert. Zuerst erfolgt eine Aktivierung der Probe derart, dass nur eine Teilmenge der Markierungsmoleküle in der Probe aktiviert werde, also Fluoreszenzstrahlung emittieren können.
Dann wird die Anregungsstrahlung auf die Probe aufgebracht und die fluoreszierende Probe abgebildet, wobei die Fluoreszenzstrahlung dann nur von der aktivierten Teilmenge stammen kann.
Nachdem diese Fluoreszenz abgeklungen ist erfolgt eine erneute Aktivierung, die nun aus statistischen Gründen eine andere Teilmenge der PTOL erfasst.
So wird die Menge aller Markierungsmoleküle in verschiedene Teilmengen aufgeteilt, die nacheinander in den zur Fluoreszenz anregbaren Zustand überführt werden. Nach der Anregung erfolgt eine Abbildung der Fluoreszenzstrahlung, vorzugsweise mit einem Sensorarray.

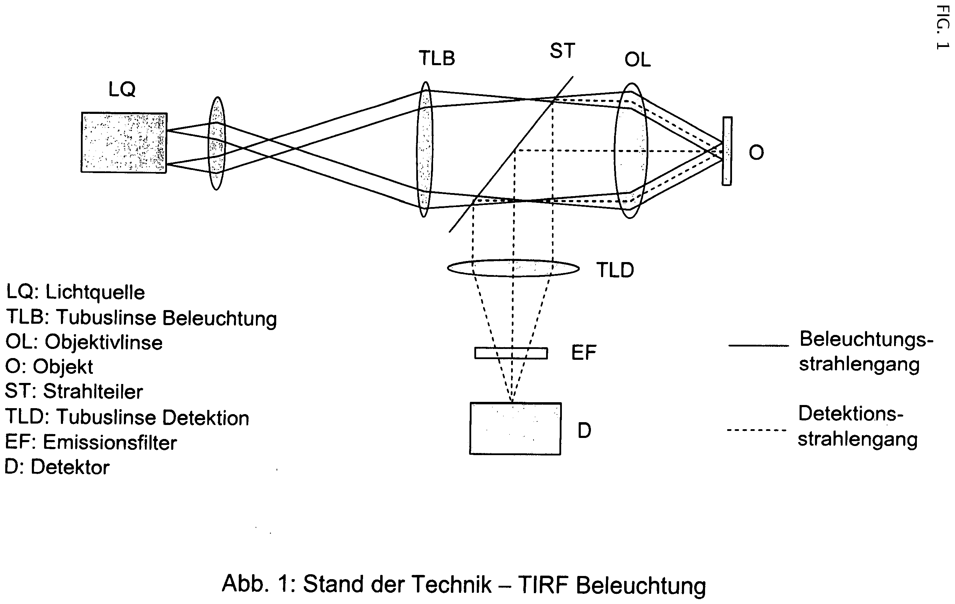

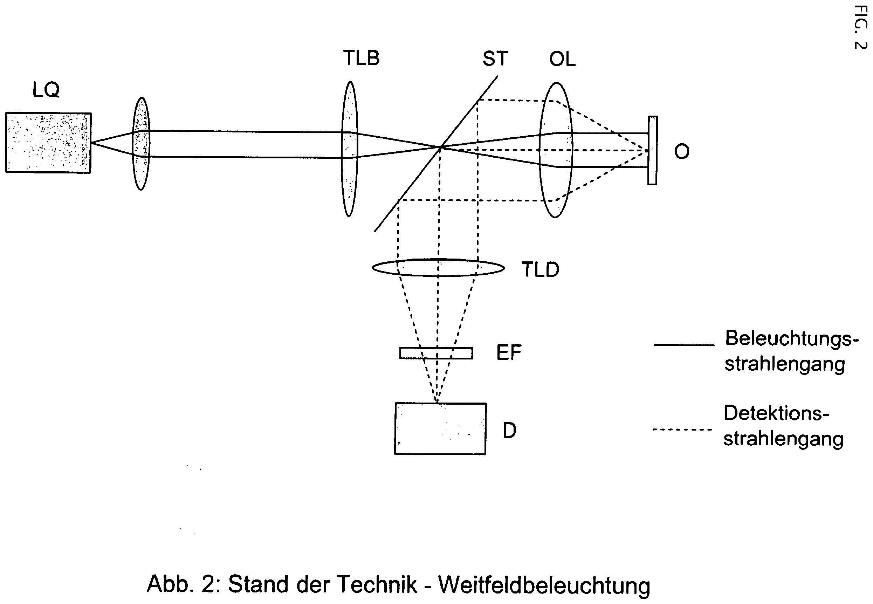

Ein entsprechendes Fluoreszenzmikroskop weist eine Anregungslichtquelle sowie eine Umschaltlichtquelle auf, die die Probe mit entsprechenden Signalen beaufschlagen.
Die Probe wird mittels eines Objektives auf ein Sensorarray abgebildet.
Ein Computer ist vorgesehen, der die Umschaltlichtquelle und die Anregungslichtquelle über Steuerleitungen ansteuert.
Dabei kann die Aktivierung und Anregung in totaler Reflexion (Abb. 1, TIRF = totalinternal-reflection fluorescence) oder im Weitfeld (Abb. 2) erfolgen.
Die Auflösung wird bei diesem Verfahren vor allem durch die lokale Photonenstatistik am Ort des Moleküls bestimmt. Diese hängt mit der Gesamtzahl der detektierten Fluoreszenzphotonen, der lokalen Intensität und dem Untergrund zusammen.
Eine Optimierung dieser Statistik durch oder nach der Detektion führt direkt zu einer verbesserten Lokalisierungsgenauigkeit und damit Auflösung.
Alternativ kann eine solche optimierte Statistik eine schnellere Bildaufnahme bei gleicher Auflösung ermöglichen.
Neben der Auflösung ist ein weiteres wichtiges Merkmal die Möglichkeit, mehrere, verschiedene Moleküle in einer Probe zu detektieren. Dies erlaubt, Korrelationen zwischen Molekülen und Strukturen in der Probe zu untersuchen. Um diese Korrelationen mit der hohen Genauigkeit der Lokalisierung zu erhalten, ist eine gleichzeitige Detektion der Signale auf einem Detektor eine bevorzugte Lösung.

### Erfindung

Es ist Aufgabe der vorliegenden Erfindung für beide genannten Probleme, die verbesserte Positionsbestimmung der Moleküle durch Optimierung der lokalen Statistik (Fluoreszenz- und Untergrundsphotonen) und die simultane Detektion von mehreren Molekülen mit einem Detektor, vorteilhafte Lösungen anzugeben.

Erfindungsgemäß wird die Aufgabe vorteilhaft dadurch gelöst, dass
im Strahlengang, vorzugsweise der Detektion, eine Phasenmaske vorgesehen ist, die in der Detektorebene eine Lichtverteilung (PSF) mit zumindest teilweise begrenztem, lokalen Strahlungsminimum erzeugt.
Bevorzugte einsetzbare Phasenmasken sind Spiralphasenmasken, Halbraumphasenmasken sowie andere Masken mit kontinierlicher oder diskontinuierlicher Phasenverzögerungsänderung.

In einer zweiten vorteilhaften Ausführung ist im Strahlengang eine Phasenmaske oder ein Axicon zur Erzeugung einer Besselverteilung (PSF) in der Detektorebene vorgesehen.
Vorteilhaft kann eine zusätzliche ringförmige Amplitudenmaske zwischen Phasenmaske und Detektor angeordnet sein.
Erfindungsgemäß ist weiterhin vorgesehen, dass
im Beleuchtungsstrahlengang Mittel zur Strukturierung der Beleuchtungsverteilung vorgesehen sind.
Diese können aus Phasen- und/oder Amplitudengittern oder Mitteln zur Aufspaltung und Überlagerung kohärenten Lichtes, so dass die Strukturierung durch Interferenz in der Objektebene entsteht, bestehen.
In einem erfindungsgemäßen Verfahren wird die Strukturierung kontinuierlich oder in diskreten Schritten verschoben, wobei mindestens zwei Aufnahmen bei verschiedenen Positionen der Strukturierung und eine Berechnung eines Schnittbildes erfolgen.
Erfindungsgemäß ist weiterhin vorgesehen, dass
im Detektionsstrahlengang Mittel zur spektralen Aufspaltung des Probenlichtes wie Gitter und/ oder Prisma vorgesehen sind.
Ein bevorzugtes Verfahren besteht darin, dass bei einer Aufnahme (Detektion) mit Gitter eine Bestimmung des spektralen Emissionsschwerpunktes der Fluoreszenz aus der Lage und/oder Bestimmung der spektralen Verteilung aus der Form der Lichtverteilung in einer oder mehrerer höherer Beugungsordnungen erfolgt.
Bei einer Aufnahme mit Prisma kann eine separate Aufnahme mit und ohne Prisma erfolgen sowie ebenfalls eine Bestimmung des spektralen Emissionsschwerpunktes der Fluoreszenz aus der Lage und/oder Bestimmung der spektralen Verteilung aus der Form der Lichtverteilung.
Eine Trennung von durch spektrale Aufspaltung überlagerten Lichtverteilungen kann vorteilhaft durch spektrales Entmischen erfolgen.
Erfindungsgemäß ist weiterhin vorgesehen, dass
Mittel im Detektionsstrahlengang angeordnet sind, die eine farbabhängige Lichtverteilung (PSF) in der Detektorebene hervorrufen.
Das können Optiken mit chromatischem Fehler, Phasenmasken, Halbraumphasenmasken, Amplitudenmasken oder auch diffraktive Linsen sein.

Erfindungsgemäß kann eine Ermittlung des spektralen Schwerpunktes der Emission aus der farbabhängigen PSF, mittels kalibrierter oder berechneter Lichtverteilungen als Funktion der Wellenlänge, erfolgen.

Erfindungsgemäß ist weiterhin vorgesehen, dass
die Probenbeleuchtung in eine und/oder in die Nähe einer Pupillenebene des Strahlenganges zwischen Probenebene und Erfassungssebene fokussiert wird und in dieser Ebene Mittel zur räumlichen Trennung des Beleuchtungslichtes vom Detektionslicht vorgesehen sind,
wobei die Mittel zur räumlichen Trennung aus zumindest einem reflektierenden ersten Abschnitt und zumindest einem transmittierenden zweiten Abschnitt bestehen, wobei der reflektierende Abschnitt für die Einkopplung des Beleuchtungslichtes dient und der transmittierende Abschnitt für den Durchgang des Detektionslichtes in Richtung der Detektion oder der transmittierende für die Einkopplung des Beleuchtungslichtes und der reflektive für die Auskopplung des Detektionslichtes dient.
Vorteilhaft ist in oder in der Nähe der Pupillenebene des Mikroskopobjektives ein Strahlteiler vorgesehen ist, der einen ersten kleinen Abschnitt aufweist, der reflektierend oder transmittierend ausgebildet ist und einen zweiten größeren Abschnitt aufweist ist, der transmittierend oder reflektierend ausgebildet ist. Erfindungsgemäß ist weiterhin vorgesehen, dass
eine Empfängerarray aus positionsempfindlichen Empfängern (psd) gebildet wird, wobei
ein Auslesen von Position und Positionsgenauigkeit der Lichtverteilung für jedes Element des Arrays erfolgt.

### Ausführungsbeispiele

Die Anordnungen werden dabei im Folgenden meist in Weitfeldbeleuchtung gezeigt. Analoge Anordnungen gelten für die totale Reflexion (TIRF).

### Bezugszeichen:

LQ: Lichtquelle
TLB: Tubuslinse Beleuchtung
OL: Objektivlinse
O: Objekt
ST: Strahlteiler
TLD: Tubuslinse Detektion
EF: Emissionsfilter
D: Detektor

Den nachfolgenden Abbildungen gemein sind die Elemente Lichtquelle LQ, eine beleuchtungsseitige Tubuslinse TLB, ein Objektiv OL, das Objekt (Probe) O, ein Strahlteiler ST zur Trennung von Beleuchtungs- und Detektionslicht (Hauptfarbteiler), eine detektionsseitige Tubuslinse TLD, Emissionsfilter EF sowie ein Detektor D.
Die durchgehenden Linien kennzeichnen den Beleuchtungsstrahlengang, die gestrichelten Linien den Detektionsstrahlengang.
Der gezeichnete Strahlverlauf ist beispielhaft und kann durch andere Strahlengänge ersetzt werden, um eine Weitfeldbeleuchtung - und Detektion, wie sie dem Fachmann geläufig ist,
oder einen konfokalen Strahlengang eines Scanmikroskopes oder eines Mikroskops mit parallel konfokaler Beleuchtung und Detektion wie bei der Verwendung von Nipkowscheiben, darzustellen.
Im Falle der PAL-M Technologie ist die bevorzugte Ausführung derzeit in einer Weitfeldanordnung zu sehen.
In Abb.1 sind beispielhaft für die TIRF Beleuchtung zwei Strahlen dargestellt, die in die rückwärtige Fokalebene des Objektives fokussiert werden, in einer radialen Position zur optischen Achse, die dazu führt, dass sie in einem Winkel oberhalb des TIRF - Winkels (Totalreflektion) in den Objektträger (hier nicht dargestellt) fokussiert werden.
Abb. 2 zeigt einen beispielhaften Strahlengang zur Weitfeldbeleuchtung.

In Fig. 3 ist beispielhaft eine Spiralphasenmaske dargestellt, die im Detektionsstrahlengang dem Strahlteiler in Richtung Detektor nachgeordnet ist.

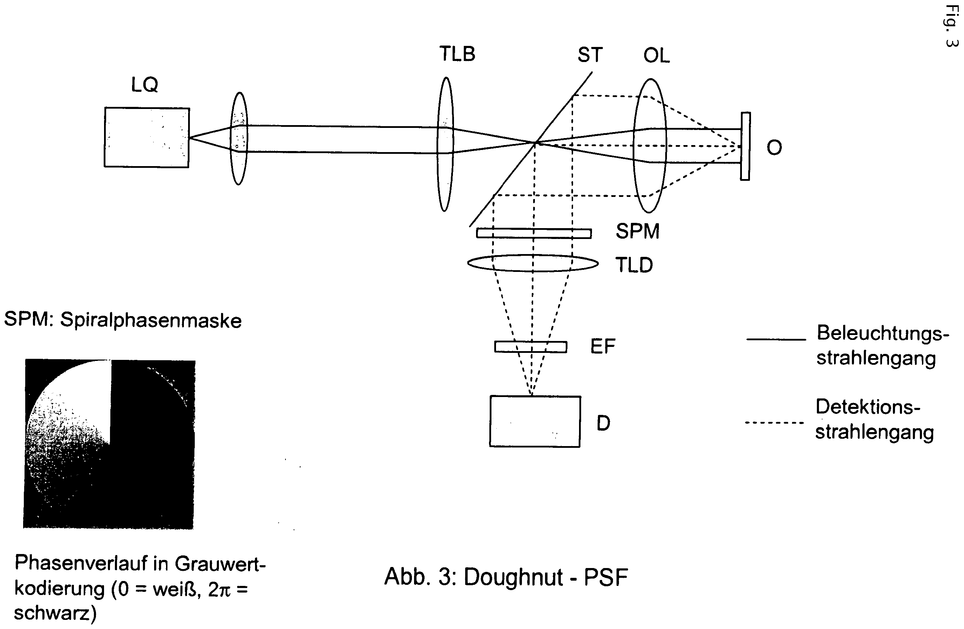

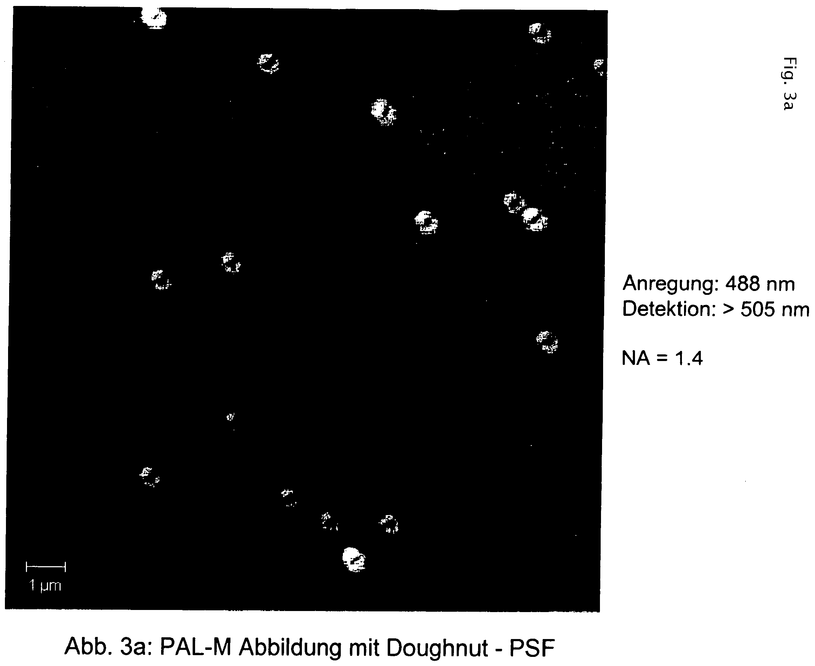

Eine vorteilhafte Möglichkeit zur Optimierung der lokalen Statistik besteht darin, spezielle PSF zu verwenden, die gegenüber konventionellen PSF bei der Lokalisierung Vorteile aufweisen. Eine bevorzugte PSF in diesem Zusammenhang ist die sogenannte Doughnut-PSF, wobei lateral eine zentrale Nullstelle der Intensität von einem Intensitätsring umgeben wird (Abb. 3a zeigt die an der Stelle der leuchtenden Punkte entstehenden Nullstellen, die von einem Intensitätsring umgeben sind).
Durch entsprechend ausgebildete Phasenmasken mit einer Phasenänderung können diese PSF vorteilhaft erzeugt werden.
Durch einen Phasensprung auf der Maske wird eine destruktive Interferenz erzeugt, die von Maxima konstruktiver Interferenz umgeben ist. Hierzu wird auch auf DE102006047912A1 verwiesen.
Bevorzugt wird diese PSF durch eine Spiralphasenmaske im Detektionsstrahlengang mit einem Phasenverlauf *S*(*φ*) = exp(-*jφ*) erzielt, wobei ϕ der Azimutalwinkel ist.
Die Spiralphasenmaske beeinflusst im Wesentlichen die laterale Struktur der psf, die axiale Struktur bleibt im Wesentlichen unverändert.
Die Doughnut-PSF zeichnet sich in diesem Zusammenhang durch folgende Eigenschaften aus:
- die Doughnutbeams sind weniger empfindlich bezüglich z.B. sphärischer Aberration, die selbst bei optimalem optischen System durch kleine Brechzahldifferenzen in Immersion und Objekt immer vorliegt, und sind deshalb fast immer beugungsbegrenzt
- die Positionsbestimmung des Nullpunkts wird durch die Symmetrie erleichtert. Diese Eigenschaften machen bei gleicher Photonenzahl eine genauere Lokalisierung möglich. Die Doughnut-PSF oder verwandte PSF mit einer Nullstelle am Lokalisierungsort lassen sich auch durch andere Masken erzielen, die in die Offenbarung einbezogen sind.
Die Maske kann in der Nähe der Pupille, aber auch an einem beliebigen anderen Ort stehen (Abb. 3). Andere Phasenmasken (Ringphasenmaske) verändern sowohl die axiale als auch die laterale Struktur - Erzeugung einer dreidimensionalen Nullstelle.

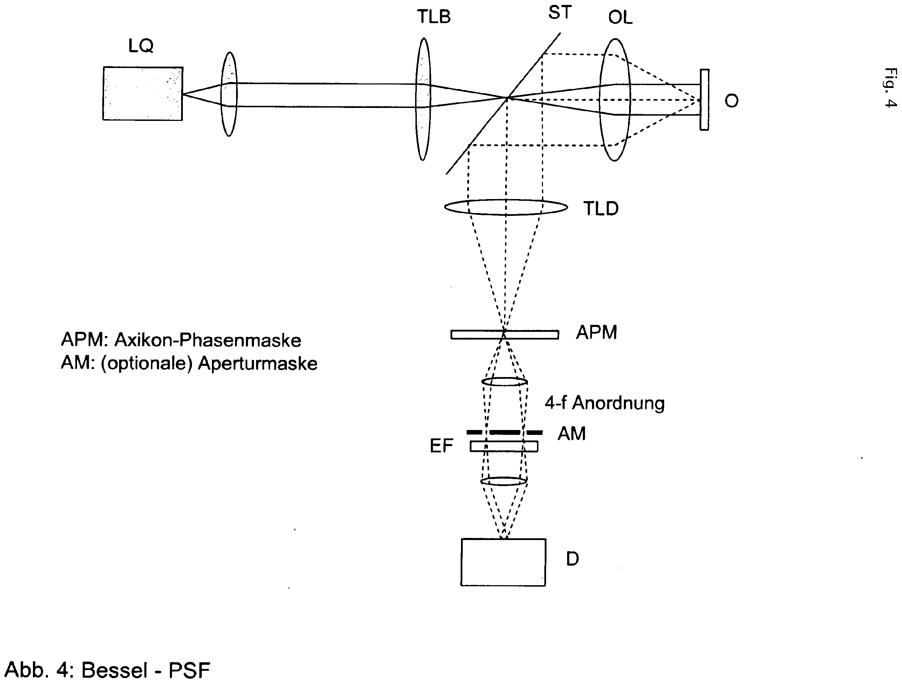

Eine weitere spezielle PSF sind sogenannte Bessel-Beams, die sich durch spezielle Axikon-Phasenmasken erzielen lassen (Abb. 4), siehe US 2005/0046818A1.
Ein beispielhafter Verlauf I einer solchen Maske ist *S*(*r*) = exp(-*jr*) + exp(*jr*) wobei r die Radialkoordinate im Strahl ist. Diese Maske sollte in oder in der Nähe eines Zwischenbildes stehen und erzeugt eine ringförmige Beleuchtung der Pupille.
In Fig. 4 ist ein Axicon APM dargestellt in einem Zwischenbild in der Detektion dargestellt, sowie eine ringförmige Amlitudenmaske AM in einer 4f Anordnung von zwei Übertragungslinsen vordem Detektor.

Im Gegensatz zu US 2005/0046818A1 befindet sich die Phasenmaske hier im Detektionsstrahlengang. Um Lichtverluste zu vermeiden kann eine optionale ringförmige Amplitudenmaske, die zur Verbesserung der axialen Homogenität der PSF eingesetzt werden kann (US 2005/0046818A1) im Strahlengang zwischen Phasenmaske und Detektor stehen (Abb. 4).
Über die Ringmaske Amplitudenmaske) wird eine Feinabstimmung der Verteilung erreicht, durch Wegschneiden von Nebenmaxima wird in axialer Richtung eine besonders homogene Verteilung erreicht.

Die auf den Detektor abgebildete PSF weist folgende, vorteilhafte Merkmale auf:
- die Schärfentiefe der Abbildung ist erweitert, wodurch ein hochaufgelöstes "Projektionsbild" über einen relativ großen Schärfentiefebereich entsteht
- das Maximum der Verteilung ist ca. 30% schmaler als bei einer konventionellen PSF, was zumindest teilweise die verringerte Intensität im Maximum ausgleicht
- die PSF weist ein typisches Raumfrequenzspektrum (Unterdrückung geringer Raumfrequenzen) auf, welches es erlaubt vor Positionsbestimmung durch angepasste Filterung des niedrigfrequenten Anteils in den Bildern im Fourierbereich eine effektive Untergrundunterdrückung zu erzielen.
Auch bei anderen PSF lässt sich durch eine an die PSF optimal angepasste Filterung niederfrequenter Raumfrequenzen eine Untergrundsunterdrückung erzielen, was Teil dieser Erfindungsmeldung ist. Allerdings ist diese Filterung bei PSF, die ähnlich wie die Bessel-Beams einen hohen Anteil hoher Raumfrequenzen aufweisen, besonders wirkungsvoll. Die optimale Filterung sollte dabei auch das Raumfrequenzspektrum des Untergrund berücksichtigen, welches an einer geeigneten Stelle im Bild (ohne zu lokalisierende Moleküle) oder aus einem Subset von aufgenommenen und ggf. teilverrechneten Bildern gewonnen werden kann. Im einfachsten Fall ist der Filter dann das inverse Spektrum des Untergrunds.

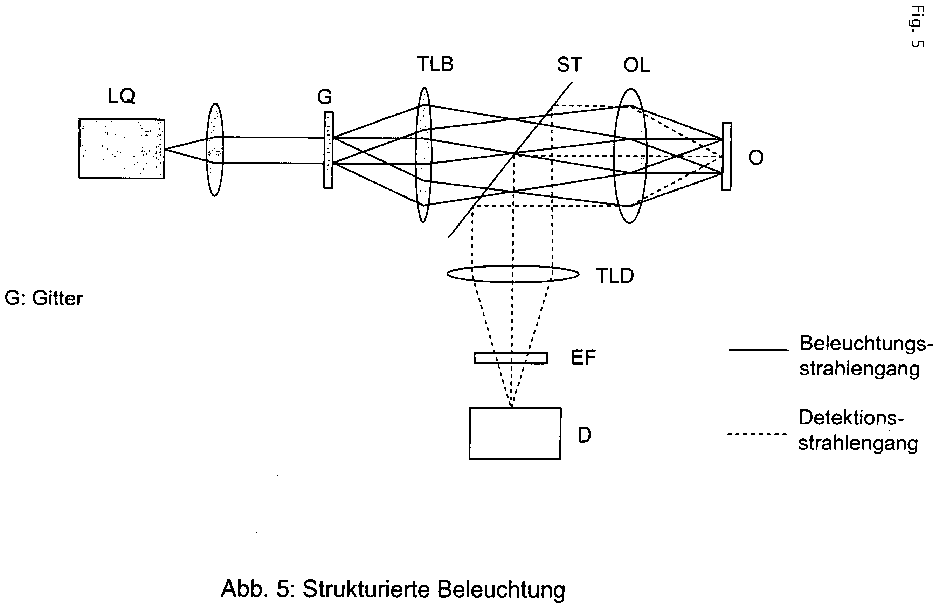

Eine auf ähnlichem Prinzip basierende Unterdrückung des Untergrundes lässt sich durch strukturierte Beleuchtung erzielen. Hierbei befindet sich z.B. ein Phasen- oder Amplitudengitter im Anregungsstrahlengang (Abb. 5).
Alternativ kann auch durch Aufspaltung und Überlagerung kohärenten Lichtes in der Objektebene mittels Interferenz eine strukturierte Beleuchtung erzeugt werden.

Wenn die Strukturierung während der Beleuchtung bewegt wird, ändert sich die Emission der im Fokus befindlichen Moleküle ("Blinken"). Im Gegensatz dazu bleiben die außerfokalen Anteile im Wesentlichen unverändert.
Eine Aufnahme von mindest 2 Bildern pro Aktivierungszyklus und die Berücksichtigung des modulierten Signalanteils erlaubt daher eine effiziente Untergrundsunterdrückung .
Die einzelnen Punkte werden bei der Verschiebung von hell auf dunkel durchmodulier und das Blinken der PSF wird als Signal aufgenommen.
Eine vorteilhafte Ausführung ist ein kontinuierliches Verschieben des Gitters.
Bei Aufnahme von beispielsweise 3 Bildern mit verschiedenen Phasenlagen (siehe hierzu WO97/06509, WO98/45745, DE10155002A1) erfolgt die bekannte Berechung aus den Einzelbildern.
Zeitlich wird das Verschieben des Gitters vorteilhaft an den Aktivierungszyklus angebunden (synchronisiert), innerhalb eines Aktivierungszyklus würden dann beispielsweise 2 oder 3 Aufnahmen mit verschobenem Gitter gemacht und danach ein neuer Aktivierungszyklus eingeleitet.

Ein potentielles Problem könnte die durch Datentransfer limitierte Geschwindigkeit des Auslesens der Kamera sein. Dieses Problem kann durch eine Kamera umgangen werden, die von vornherein deutlich geringere Pixelzahl aufweist als dies von einer konventionellen Kamera bekannt ist. Da in jedem Bild nur eine geringe Zahl leuchtender Moleküle zu detektieren ist, kann man bei PAL-M prinzipiell mit verringerter Pixelzahl auskommen. Allerdings erfordert die Lokalisierung eine gute Abtastung der PSF. Alternativ kann jeder der (wenigen) Pixel als positionsempfindlicher Empfänger ausgelegt werden. Dies kann z.B. ein zweidimensionales Array von aus dem Stand der Technik bekannten positionsempfindlichen Dioden (PSD) sein. Da die Flächen solcher PSD im Vergleich zu konventionellen Kamerapixeln groß sind, muss die Bildvergrößerung entsprechend groß gewählt werden. Mittels CMOS-Technologie lassen sich aber auch spezielle Arrays mit kleiner Pixelgröße herstellen. Mit integrierter Auswerteelektronik kann dann der Datentransfer auf wenige Parameter (wie der Schwerpunkt der Verteilung und ein Maß für die Positionsgenauigkeit = 3 Parameter) für jedes Molekül beschränkt und damit dramatisch reduziert werden. Voraussetzung ist allerdings, dass im statistischen Mittel auf jeden Pixel nur ein leuchtendes Molekül abgebildet wird. Da die Voraussetzung für PAL-M Bildgebung ist, dass zwei angeregte Moleküle mehr als die volle Halbwertsbreite (FWHM) der konventionellen PSF voneinander entfernt liegen, ist eine Pixelgröße, die etwa dem Doppelten der FWHM entspricht, denkbar. Da man nach dem Stand der Technik mindestens nach dem Nyquist-Theorem abtasten muss (d.h. zwei Pixel pro FWHM in beide laterale Richtungen), kann man in obigem Fall mindestens eine 4×4 = 16-fache Reduktion der Pixelzahl, eine mindestens 16/3 ≈ 5-fache Reduktion der Datenmenge und damit eine mindestens 5-fache Geschwindigkeitserhöhung erreichen.

Die optimale Untergrundunterdrückung verhindert die Detektion des Untergrundes, so dass sowohl das damit verbundene Rauschen vollständig im Bild fehlt als auch die Dynamik des Detektors optimal ausgenutzt werden kann. Eine solche Möglichkeit besteht in der Kombination von Aktivierung im Weitfeld mit parallel-konfokaler Detektion, wie sie mit Nipkow-Disk Scannern oder Linienscannern erzielt werden kann.

Die Detektion von mehreren verschiedenen Molekülen simultan mit einem Detektor basiert auf der spektralen Unterscheidung der Fluoreszenz der verschiedenen Farbstoffmoleküle. Insbesondere kann man sich bei der PAL-M zu Nutze machen, dass man separierte Einzelmoleküle detektiert. Hieraus ergeben sich Möglichkeiten der spektralen Trennung der Moleküle auf einem Detektor.

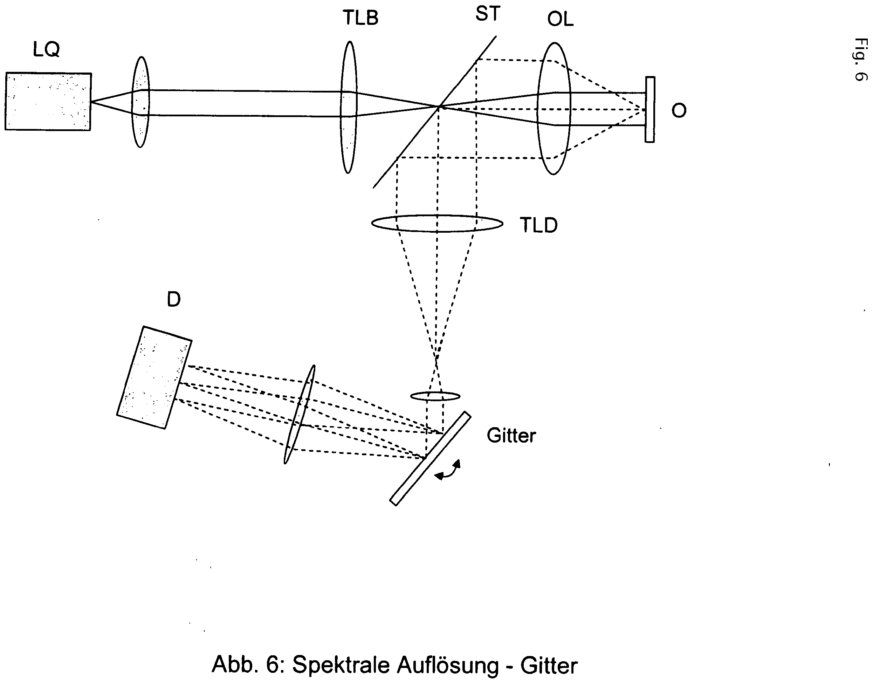

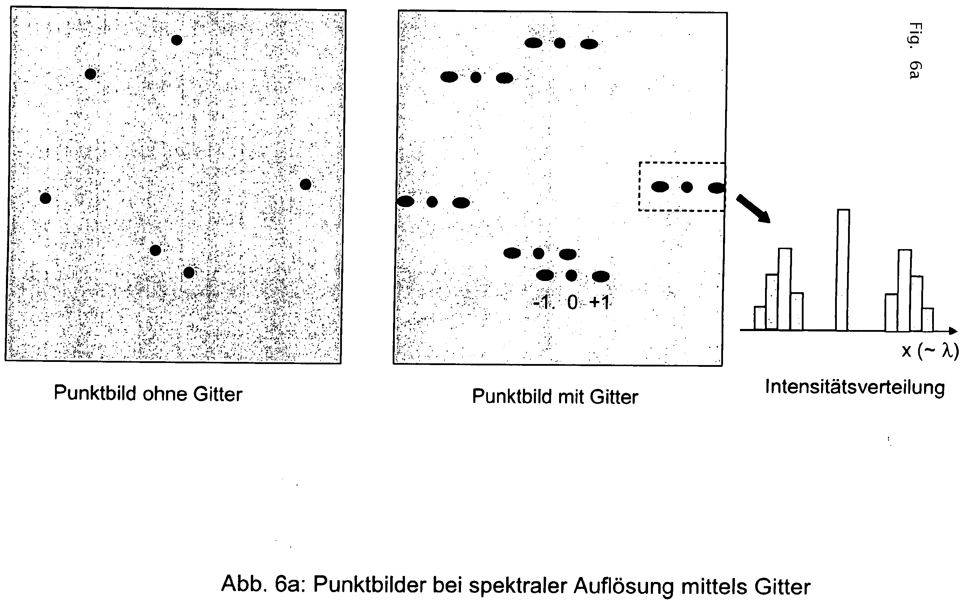

In Fig. 6 ist ein Gitter G zur spektralen Aufspaltung im Detektionstrahlengang dargestellt:

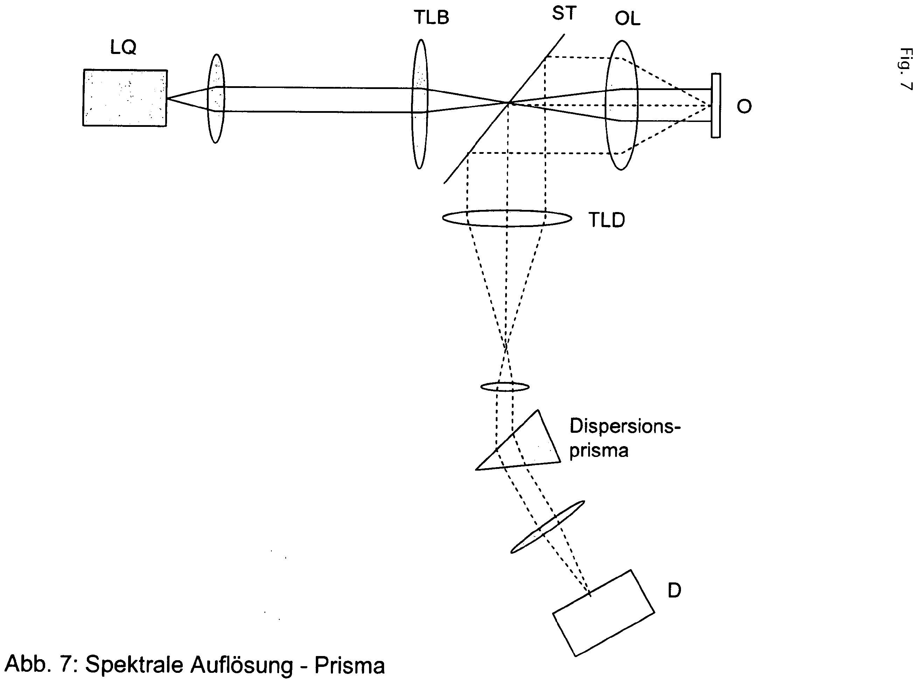

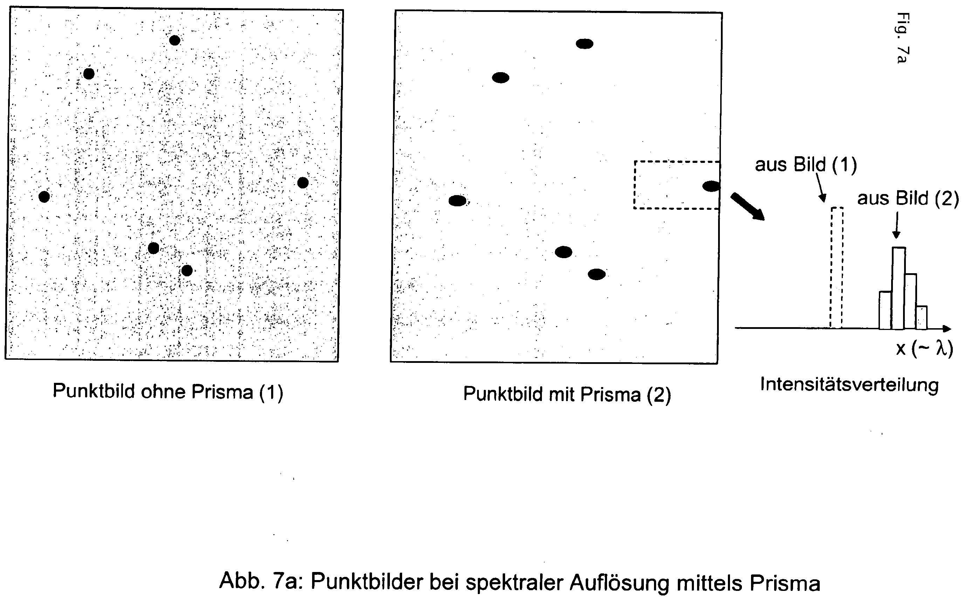

In Fig.7 ist zur spektralen Aufspaltung ein Dispersionsprisma dargestellt.

Mittels eines spektral aufspaltenden Elements (Gitter, Prisma) im kollimierten Detektionsstrahlengang lassen sich auf dem Detektor PSF abbilden, deren Lage von der spektralen Zusammensetzung der Fluoreszenz abhängt.
Bei einem Gitter detektiert man z.B. eine PSF am Ort der 0. Ordnung (entspricht der Lage ohne Gitter) und zwei weitere (leicht aufgespalten) am Ort der ±1. Ordnung (Abb. 6, 6a).
Durch eine weitere Aufnahme ohne Gitter lassen sich die 0. Ordnungen ermitteln von den 1. Ordnungen trennen. Aus dem Abstand der 0. und ±1. Ordnungen lässt sich nach entsprechender Eichung der spektrale Schwerpunkt ermitteln, aus der Form des Spektrums der 1. Ordnung die spektrale Verteilung.
Eine weitere Möglichkeit besteht darin, symmetrische Verteilungen der 0. und der beiden ersten Ordnungen auf dem Detektor direkt zu suchen und auszuwerten.

Da die Fluoreszenzspektren typischerweise spektral breitbandig sind, die aufgenommenen Punkte also eine gewisse Ausdehnung haben lässt sich in der Regel auch aus einer Aufnahme die 0. (unverbreitete) von den ±1. Ordnungen trennen.

Ein bevorzugtes Gitter beugt dabei mit hoher Effizienz in die 0. und ±1. Ordnungen und vernachlässigbar in höhere Ordnungen.
Bei der Verwendung eines Prismas, was aus Effizienzgründen vorteilhaft sein kann, tritt von vornherein nur eine Ordnung auf (Abb. 7, 7a). Hier benötigt man mindestens 2 Messungen bei verschiedenen Stellungen des Prismas (bzw. bevorzugt eine weitere Messung mit ausgeschwenktem Prisma), um eine eindeutige Zuordnung der Bildpunkte und der spektralen Aufspaltung zu erzielen. Auch hier kann aus der Form der spektral aufgespaltenen Verteilung im Bild das Spektrum erhalten werden.

Es kann vorkommen, dass zwei Moleküle zwar ohne spektrale Aufspaltung ausreichend räumlich getrennt sind, durch die spektrale Aufspaltung eine Überlagerung entsteht. Hier kann man bei Kenntnis der spektralen Eigenschaften der Farbstoffe oder Ermitteln der spektralen Eigenschaften aus anderen Bereichen des Bildes, beispielsweise auch einer anderen Beugungsordnung, durch spektrale Entmischung mittels Bildverarbeitung eine Trennung erreichen und eindeutig Spektren zu Molekülen zuordnen.

Ein besonderer Fall stellt ein Geradsichtprisma dar. Hier wird ebenfalls das Licht spektral aufgespalten allerdings symmetrisch um die nominelle Position des Moleküls herum. Vorteilhafterweise reicht hier meist eine Bildaufnahme aus.

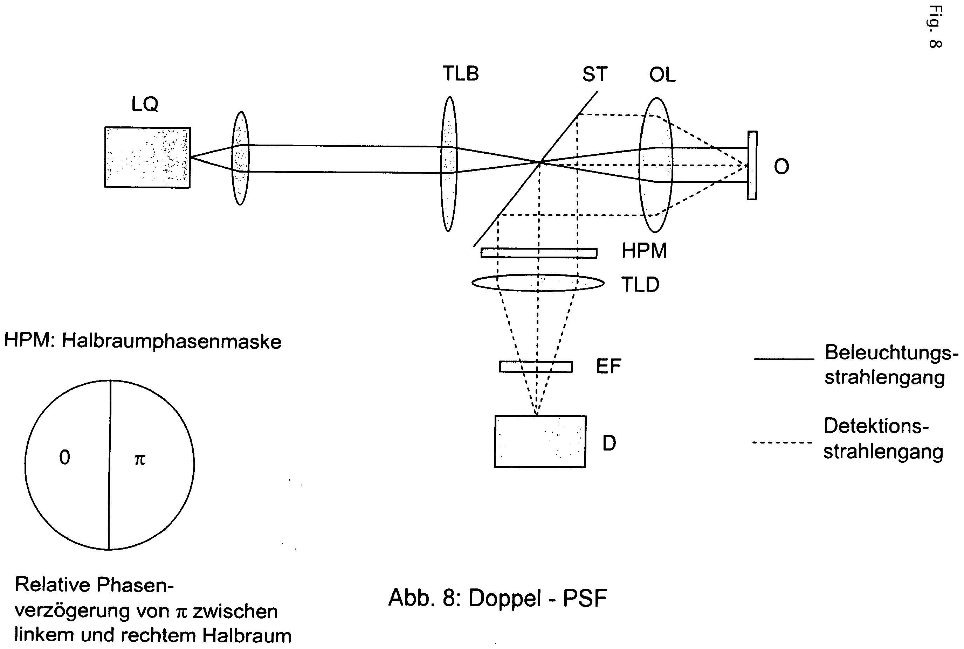

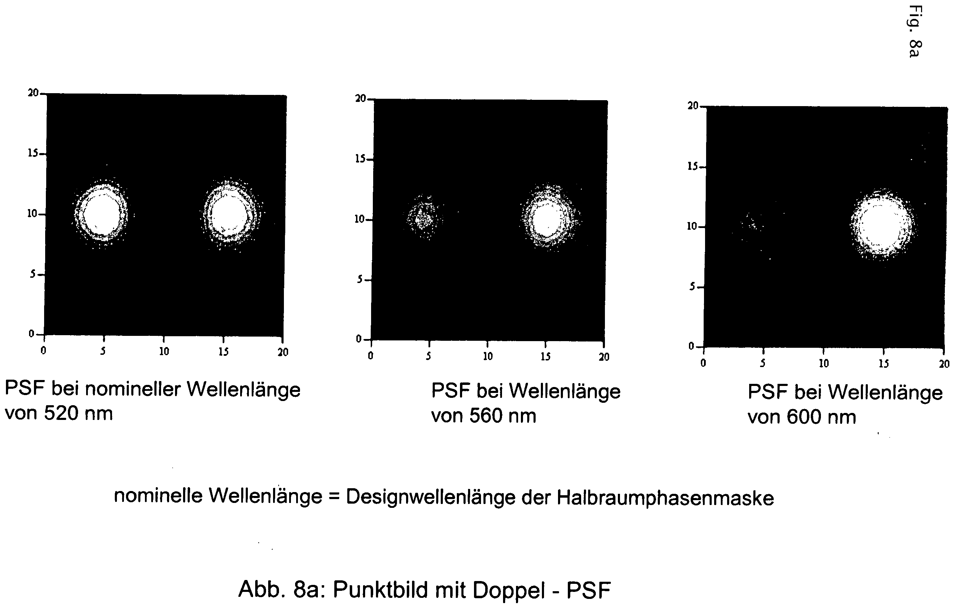

In ähnlicher Weise kann man die spektrale Abhängigkeit der Gestalt der PSF nutzen, um die spektrale Trennung vorzunehmen. Insbesondere mit Hilfe von Phasenmasken erzeugte PSF werden eine sehr starke Abhängigkeit aufweisen. Ein Beispiel ist die Doughnut-PSF, die mit einer Spiralphasenmaske erzeugt wird. Ein besonderer Vorteil ist die primäre Wellenlängenabhängigkeit der lateralen Verteilung. Ein weiteres Beispiel ist eine Maske mit einem Phasensprung von π im Halbraum, die zu einer Doppel-PSF führt (Abb. 8).
In Fig. 8 ist die Halbraummaske HPM dargestellt und im Detektionsstrahlengang dem Strahlteiler nachgeordnet.
Die spektrale Variation kann kalibriert und bei der Auswertung berücksichtigt werden (Abb. 8a). Gemeint ist dass die Maske für unterschiedliche Wellenlängen unterschiedlich wirkt.
Weit weg von der designten Wellenlänge lässt die Wirkung nach, es entstehen nur "normale" psf.
Der Übergang von der Doppel- zur Einzel- psf ist kalibrierbar und aus der vorhandenen Verteilung kann die Wellenlängenverteilung bestimmt werden.
Es sind auch andere Element e vorteilhaft denkbar, die die Gestalt der psf wellenlängenabhängig beeinflussen, wie diffraktive Elemente.

Neben Phasenelementen können auch Amplitudenelemente (oder Elemente mit Phasen- und Amplitudenvariationen) eine Wellenlängenabhängigkeit einführen, die man im besagten Sinne ausnutzen kann. Ein typischer Vertreter ist z.B. eine diffraktive Linse die in Kombination mit einem Mikroskopobjektiv (Hybridobjektiv) einen chromatischen Fehler einführt, der zur spektralen Kodierung dienen kann.

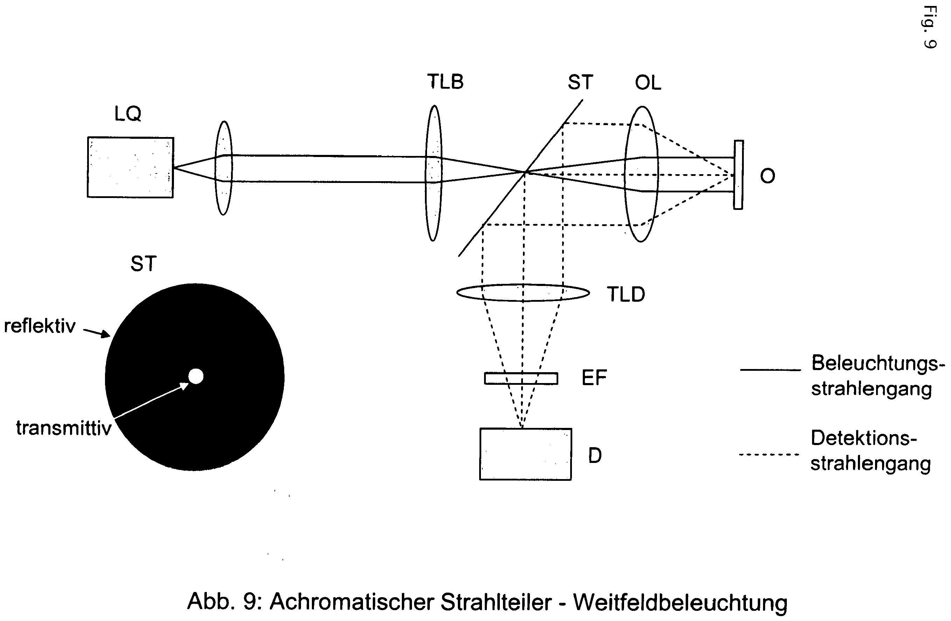

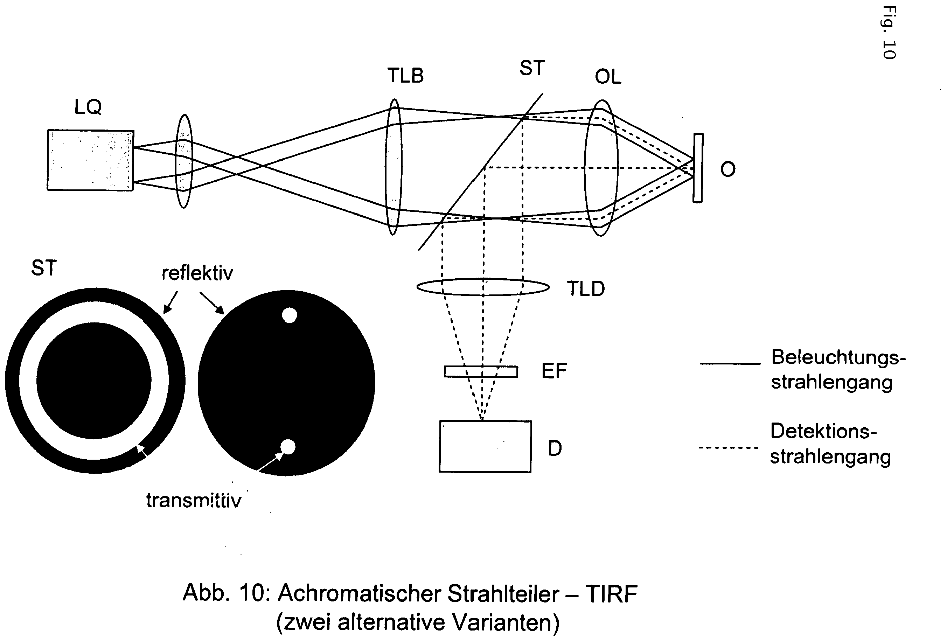

Um verschiedene Moleküle anzuregen und zu detektieren ist eine möglichst achromatische Strahltrennung von Anregung und Detektion erforderlich. Aufgrund der Aktivierung und Anregung im Weitfeld ist daher die Verwendung eines Achrogate Strahlteilers (DE10257237A1) vorteilhaft. Dieser erlaubt eine hocheffiziente und voll flexible Trennung der Strahlengänge z.B auch bei simultaner Anregung mit verschiedenen Wellenlängen (Abb. 9 und 10).

In Fig. 9 und 10 ist ein achromatischer Strahlteiler gemäß DE10257237A1 dargestellt, in oder in der Nähe der Objektivpupille.
In einer Ausführung zur Weitfeldbeleuchtung ist ver vin Fig. 9 mit einem mittigen kleinen transmittiven Bereich versehen auf den beleuchtungsseitig fokussiert wird und einem großen reflektiven Bereich zur Übertragung nahezu des gesamten Detektionslichtes in Richtung des Detektors D.

In Fig.10 weist der Strahlteiler alternativ zwei durchlässige kleine Bereiche am Rand für die Beleuchtungsstrahlen oder einen ringförmigen transmittiven Bereich auf, auf den beliebig orientierte Beleuchtungsstrahlen zur TIRF Beleuchtung fokussiert werden können.
Der übrige reflektive Bereich dient wiederum zur Ausspiegelung des Probenlichtes in Richtung der Detektion.

Die Erfindung umfasst auch Gegenstände gemäß der folgenden Sätze:
1. Vorrichtung, insbesondere ein Mikroskop, charakterisiert durch ein beugungsbegrenztes Auflösungsvolumen,
   mit mehreren zwischen unterschiedlichen Zuständen umschaltbaren Farbstoffmolekülen (UF), wobei mindestens ein Zustand fluoreszierend ist, die Fluoreszenz mit einem Objektiv (O) gesammelt und mit einem optischen System auf einen ortsauflösenden Detektor abgebildet wird,
   wobei die umschaltbaren Farbstoffmoleküle in mindestens einem Teil der Probe eine Verteilungsdichte aufweisen, die größer ist als das Inverse des beugungsbegrenzten Auflösungsvolumens;
   einer oder mehrere Lichtquellen zur Aussendung einer Umschaltstrahlung, um eine erste Untermenge der umschaltbaren Farbstoffmoleküle in der Probe umzuschalten und zur Aussendung einer Anregungsstrahlung, um die erste Untermenge der umschaltbaren Farbstoffmoleküle anzuregen
   wobei im Strahlengang, vorzugsweise im Detektionsstrahhlengang, eine Phasenmaske vorgesehen ist, die in der Detektorebene eine Lichtverteilung (PSF) mit zumindest teilweise begrenztem lokalen Strahlungsminimum erzeugt.
2. Vorrichtung nach Satz 1,
   wobei die Umschaltung eine Photoaktivierung oder- Deaktivierung der umschaltbaren Farbstoffmoleküle ist.
3. Vorrichtung nach einem der vorangehenden Sätze,
   wobei eine Ansteuerungseinheit zur Kontrolle der Umschaltstrahlung vorgesehen ist, um zu gewährleisten, dass die Verteilungsdichte der sich im fluoreszierenden Zustand befindenden umschaltbaren Farbstoffmoleküle kleiner als das Inverse des beugungsbegrenzten Auflösungsvolumens der Vorrichtung ist.
4. Vorrichtung nach Satz 1,
   wobei die Phasenmaske eine Spiralphasenmaske, Halbraumphasenmaske und / oder eine andere Masken mit kontinuierlicher oder diskontinuierlicher Phasenverzögerungsänderung ist.
5. Vorrichtung, insbesondere ein Mikroskop, charakterisiert durch ein beugungsbegrenztes Auflösungsvolumen,
   mit mehreren zwischen unterschiedlichen Zuständen umschaltbaren Farbstoffmolekülen (UF), wobei mindestens ein Zustand fluoreszierend ist, die Fluoreszenz mit einem Objektiv (O) gesammelt und mit einem optischen System auf einen ortsauflösenden Detektor abgebildet wird,
   wobei die UF in mindestens einem Teil der Probe eine Verteilungsdichte aufweisen, die größer ist als das Inverse des beugungsbegrenzten Auflösungsvolumens;
   einer oder mehrere Lichtquellen zur Aussendung einer Umschaltstrahlung, um eine erste Untermenge der UF in der Probe umzuschalten und zur Aussendung einer Anregungsstrahlung, um die erste Untermenge der UF anzuregen ,
   wobei im Strahlengang, vorzugsweise der Detektion, eine Phasenmaske oder ein Axicon zur Erzeugung einer Besselverteilung (PSF) in der Detektorebene vorgesehen ist.
6. Vorrichtung nach Satz 5,
   wobei die Umschaltung eine Photoaktivierung oder- Deaktivierung der UF ist.
7. Vorrichtung nach einem der vorangehenden Sätze,
   wobei eine Ansteuerungseinheit zur Kontrolle der Umschaltstrahlung vorgesehen ist, um zu gewährleisten, dass die Verteilungsdichte der sich im fluoreszierenden Zustand befindenden UF kleiner als das Inverse des beugungsbegrenzten Auflösungsvolumens der Vorrichtung ist.
8. Vorrichtung nach Satz 5,
   wobei eine ringförmige Amplitudenmaske zwischen Phasenmaske und Detektor vorgesehen ist.
9. Vorrichtung, insbesondere ein Mikroskop, charakterisiert durch ein beugungsbegrenztes Auflösungsvolumen,
   mit mehreren zwischen unterschiedlichen Zuständen umschaltbaren Farbstoffmolekülen (UF), wobei mindestens ein Zustand fluoreszierend ist, die Fluoreszenz mit einem Objektiv (O) gesammelt und mit einem optischen System auf einen ortsauflösenden Detektor abgebildet wird,
   wobei die UF in mindestens einem Teil der Probe eine Verteilungsdichte aufweisen, die größer ist als das Inverse des beugungsbegrenzten Auflösungsvolumens;
   einer oder mehrere Lichtquellen zur Aussendung einer Umschaltstrahlung, um eine erste Untermenge der UF in der Probe umzuschalten und zur Aussendung einer Anregungsstrahlung, um die erste Untermenge der UF anzuregen ,
   wobei im Detektionsstrahlengang Mittel zur spektralen Aufspaltung des Probenlichtes vorgesehen sind.
10. Vorrichtung nach Satz 9,
   wobei die Umschaltung eine Photoaktivierung oder- eaktivierung der UF ist.
11. Vorrichtung nach mindestens einem der vorangehenden Sätze,
   wobei eine Ansteuerungseinheit zur Kontrolle der Umschaltstrahlung vorgesehen ist, um zu gewährleisten, dass die Verteilungsdichte der sich im fluoreszierenden Zustand befindenden UF kleiner als das Inverse des beugungsbegrenzten Auflösungsvolumens der Vorrichtung ist
12. Vorrichtung nach Satz 9,
   wobei die Mittel mindestens ein Gitter und/oder Prisma sind.
13. Verfahren zum Betrieb einer Vorrichtung nach einem der Sätze 9 oder 12,
   wobei bei einer Aufnahme mit Gitter eine Bestimmung des spektralen Emissionsschwerpunktes der Fluoreszenz aus der Lage und/oder Bestimmung der spektralen Verteilung aus der Form der Lichtverteilung in einer oder mehrerer höherer Beugungsordnungen erfolgt.
14. Verfahren zum Betrieb einer Vorrichtung nach einem der Sätze 9 oder 12, wobei bei einer Aufnahme mit Prisma eine Bestimmung des spektralen Emissionsschwerpunktes der Fluoreszenz aus der Lage und/oder Bestimmung der spektralen Verteilung aus der Form der Lichtverteilung bei Aufnahme mit Prisma im Detektionssstrahlengang erfolgt.
15. Verfahren nach Satz 14, wobei eine
   Aufnahme jeweils mit und ohne Prisma im Strahlengang erfolgt.
16. Verfahren nach einem der Sätze 9 bis 15, wobei eine
   Trennung von durch spektrale Aufspaltung überlagerten Lichtverteilungen durch spektrales Entmischen erfolgt.
17. Vorrichtung, insbesondere ein Mikroskop, charakterisiert durch ein beugungsbegrenztes Auflösungsvolumen,
   mit mehreren zwischen unterschiedlichen Zuständen umschaltbaren Farbstoffmolekülen (UF), wobei mindestens ein Zustand fluoreszierend ist, die Fluoreszenz mit einem Objektiv (O) gesammelt und mit einem optischen System auf einen ortsauflösenden Detektor abgebildet wird,
   wobei die UF in mindestens einem Teil der Probe eine Verteilungsdichte aufweisen, die größer ist als das Inverse des beugungsbegrenzten Auflösungsvolumens;
   einer oder mehrere Lichtquellen zur Aussendung einer Umschaltstrahlung, um eine erste Untermenge der UF in der Probe umzuschalten und zur Aussendung einer Anregungsstrahlung, um die erste Untermenge der UF anzuregen wobei Mittel im Detektionsstrahlengang vorgesehen sind, die eine farbabhängige Lichtverteilung (PSF) in der Detektorebene hervorrufen.
18. Vorrichtung nach Satz 17,
   wobei die Umschaltung eine Photoaktivierung oder- Deaktivierung der UF ist.
19. Vorrichtung nach mindestens einem der vorangehenden Sätze,
   wobei eine Ansteuerungseinheit zur Kontrolle der Umschaltstrahlung vorgesehen ist, um zu gewährleisten, dass die Verteilungsdichte der sich im fluoreszierenden Zustand befindenden UF kleiner als das Inverse des beugungsbegrenzten Auflösungsvolumens der Vorrichtung ist.
20. Vorrichtung nach Satz 17, wobei Optiken mit chromatischem Fehler und / oder Phasenmasken und/ oder Halbraumphasenmasken und/ oder Amplitudenmasken und/ oder diffraktive Linse im Detektionsstrahlengang vorgesehen sind.
21. Verfahren zum Betrieb einer Vorrichtung nach Satz 17 oder 20, wobei ein spektraler Schwerpunktes der Emission aus der farbabhängigen PSF mittels kalibrierter oder berechneter Lichtverteilungen als Funktion der Wellenlänge erfolgt.
22. Vorrichtung, insbesondere ein Mikroskop, charakterisiert durch ein beugungsbegrenztes Auflösungsvolumen,
   mit mehreren zwischen unterschiedlichen Zuständen umschaltbaren Farbstoffmolekülen (UF), wobei mindestens ein Zustand fluoreszierend ist, die Fluoreszenz mit einem Objektiv (O) gesammelt und mit einem optischen System auf einen ortsauflösenden Detektor abgebildet wird,
   wobei die UF in mindestens einem Teil der Probe eine Verteilungsdichte aufweisen, die größer ist als das Inverse des beugungsbegrenzten Auflösungsvolumens;
   einer oder mehrere Lichtquellen zur Aussendung einer Umschaltstrahlung, um eine erste Untermenge der UF in der Probe umzuschalten und zur Aussendung einer Anregungsstrahlung, um die erste Untermenge der UF anzuregen wobei die Probenbeleuchtung in eine und/oder in die Nähe einer Pupillenebene des Strahlenganges zwischen Probenebene und Erfassungssebene fokussiert wird und in dieser Ebene Mittel zur räumlichen Trennung des Beleuchtungslichtes vom Detektionslicht vorgesehen sind.
   die aus zumindest einem reflektierenden ersten Abschnitt und zumindest einem transmittierenden zweiten Abschnitt bestehen, wobei der reflektierende Abschnitt für die Einkopplung des Beleuchtungslichtes dient und der transmittierende Abschnitt für den Durchgang des Detektionslichtes in Richtung der Detektion oder der transmittierende für die Einkopplung des Beleuchtungslichtes und der reflektive für die Auskopplung des Detektionslichtes dient.
23. Vorrichtung nach Satz 22,
   wobei die Umschaltung eine Photoaktivierung oder- Deaktivierung der UF ist.
24. Vorrichtung nach einem der vorangehenden Sätze,
   wobei eine Ansteuerungseinheit zur Kontrolle der Umschaltstrahlung vorgesehen ist, um zu gewährleisten, dass die Verteilungsdichte der sich im fluoreszierenden Zustand befindenden UF kleiner als das Inverse des beugungsbegrenzten Auflösungsvolumens der Vorrichtung ist.
25. Vorrichtung, insbesondere ein Mikroskop, charakterisiert durch ein beugungsbegrenztes Auflösungsvolumen,
   mit mehreren zwischen unterschiedlichen Zuständen umschaltbaren Farbstoffmolekülen (UF), wobei mindestens ein Zustand fluoreszierend ist, die Fluoreszenz mit einem Objektiv (O) gesammelt und mit einem optischen System auf einen ortsauflösenden Detektor abgebildet wird,
   wobei die UF in mindestens einem Teil der Probe eine Verteilungsdichte aufweisen, die größer ist als das Inverse des beugungsbegrenzten Auflösungsvolumens;
   einer oder mehrere Lichtquellen zur Aussendung einer Umschaltstrahlung, um eine erste Untermenge der UF in der Probe umzuschalten und zur Aussendung einer Anregungsstrahlung, um die erste Untermenge der UF anzuregen
   Wobei zur Detektion ein Empfängerarray aus positionsempfindlichen Empfängern (psd) vorgesehen ist.
26. Vorrichtung nach Satz 25,
   wobei die Umschaltung eine Photoaktivierung oder- Deaktivierung der UF ist.
27. Vorrichtung nach einem der vorangehenden Sätze,
   wobei eine Ansteuerungseinheit zur Kontrolle der Umschaltstrahlung vorgesehen ist, um zu gewährleisten, dass die Verteilungsdichte der sich im fluoreszierenden Zustand befindenden UF kleiner als das Inverse des beugungsbegrenzten Auflösungsvolumens der Vorrichtung ist.
28. Verfahren zum Betrieb einer Vorrichtung nach Satz 27, wobei ein Auslesen von Position und Positionsgenauigkeit der Lichtverteilung für im wesentlichen jedes Element des Arrays erfolgt.
29. Verfahren nach einem der vorangehenden Ansprüche,
   zum räumlich hochauflösenden Abbilden einer Struktur einer Probe, mit den Schritten:
   Auswählen einer Substanz aus einer Gruppe von Substanzen, die mit einem Umschaltsignal mindestens einmal aus einem ersten Zustand mit ersten optischen Eigenschaften in einen zweiten Zustand mit zweiten optischen Eigenschaften überführbar sind,
   Überführen wechselnder Anteile der Substanz mit dem Umschaltsignal in den zweiten Zustand, wobei die Umschaltung so erfolgt, dass der Abstand zwischen umgeschalteten Molekülen größer gleich der beugungsbegrenzten optischen Auflösung des Mikroskops ist.
   Anregen der in den zweiten Zustand überführten Anteile und Lokalisieren der Moleküle mit einem ortsauflösenden Detektor,
   räumlich aufgelöstes Registrieren eines optischen Mess-Signals über ein Objektiv mit einem Detektor, das von den im zweiten Zustand befindlichen Farbstoffmolekülen ausgeht.
30. Verfahren nach Satz 29,
   wobei eine Deaktivierung der Moleküle aus dem zweiten Zustand in den ersten Zustand erfolgt.
31. Kombination aus Anordnungen und Verfahren gemäß den vorangehenden Sätzen und/oder gemäß den Ansprüchen.

## Patentansprüche

1. Vorrichtung, insbesondere ein Mikroskop, charakterisiert durch ein beugungsbegrenztes Auflösungsvolumen,
mit mehreren zwischen unterschiedlichen Zuständen umschaltbaren Farbstoffmolekülen (UF), wobei mindestens ein Zustand fluoreszierend ist, die Fluoreszenz mit einem Objektiv (O) gesammelt und mit einem optischen System auf einen ortsauflösenden Detektor abgebildet wird,
wobei die umschaltbaren Farbstoffmoleküle in mindestens einem Teil der Probe eine Verteilungsdichte aufweisen, die größer ist als das Inverse des beugungsbegrenzten Auflösungsvolumens;
einer oder mehrere Lichtquellen zur Aussendung einer Umschaltstrahlung, um eine erste Untermenge der umschaltbaren Farbstoffmoleküle in der Probe umzuschalten und zur Aussendung einer Anregungsstrahlung, um die erste Untermenge der umschaltbaren Farbstoffmoleküle anzuregen und
im Beleuchtungsstrahlengang ein Mittel zur Strukturierung der Beleuchtungsverteilung angeordnet ist.

2. Vorrichtung nach Anspruch 1,
wobei die Umschaltung eine Photoaktivierung oder- Deaktivierung der UF ist.

3. Vorrichtung nach mindestens einem der vorangehenden Ansprüche,
wobei eine Ansteuerungseinheit zur Kontrolle der Umschaltstrahlung vorgesehen ist, um zu gewährleisten, dass die Verteilungsdichte der sich im fluoreszierenden Zustand befindenden UF kleiner als das Inverse des beugungsbegrenzten Auflösungsvolumens der Vorrichtung ist.

4. Vorrichtung nach Anspruch 1,
wobei Mittel zur Aufspaltung und Überlagerung kohärenten Lichtes derart angeordnet sind, dass die Strukturierung durch Interferenz in der Objektebene entsteht.

5. Vorrichtung nach Anspruch 1 oder 4,
wobei als Mittel Phasen- und/oder Amplitudengitter angeordnet sind.

6. Verfahren zum Betrieb einer Vorrichtung nach Anspruch 1, 4 oder 5, wobei die Strukturierung kontinuierlich oder in diskreten Schritten verschoben wird.

7. Verfahren nach Anspruch 6, wobei mindestens zwei Aufnahmen bei verschiedenen Positionen der Strukturierung und die Berechnung eines Schnittbildes erfolgen.
